# EUROPÄISCHE PATENTSCHRIFT

(11) **EP 3 586 422 B1**
(45) Veröffentlichungstag und Bekanntmachung des Hinweises auf die Patenterteilung: **30.12.2020**
(21) Anmeldenummer: 18705378.0
(22) Anmeldetag: 13.02.2018
(51) Int. Cl.: H02J 7/00

(54) **ZWEISPANNUNGSBATTERIE**
TWO-VOLTAGE BATTERY
BATTERIE BITENSIONS

(30) Priorität: 24.02.2017 DE 102017103869
(43) Veröffentlichungstag der Anmeldung: 01.01.2020
(73) Patentinhaber: HELLA GmbH & Co. KGaA, 59552 Lippstadt (DE)
(72) Erfinder: KRIEGER, Jürgen, 97753 Karlstadt (DE); LIEBSCHER, Hans-Joachim, 97080 Würzburg (DE); KAHNT, Sebastian, 91058 Erlangen (DE)
(86) Internationale Anmeldenummer: PCT/EP2018/053559
(87) Internationale Veröffentlichungsnummer: WO 2018/153731

(56) Entgegenhaltungen:
- DE-A1-102013 113 182
- DE-A1-102013 205 102
- US-A1- 2006 279 255

## Beschreibung

Die Erfindung betrifft eine Zweispannungsbatterie für ein Fahrzeug mit einem Massepunkt, mit einer Mehrzahl von Batteriezellen, wobei Gruppen von in Reihe verschalteten Batteriezellen Batteriezellblöcke bilden und wobei bevorzugt wenigstens ein erster Batteriezellblock permanent mit dem Massepunkt der Zweispannungsbatterie verbunden ist, mit einer Mehrzahl von Zellmonitoren für die Batteriezellblöcke, wobei die Zellmonitore ausgebildet sind zum Überwachen einer von den einzelnen Batteriezellen des jeweiligen Batteriezellblocks bereitgestellten Spannung und/oder eines Stroms durch die Batteriezellen des jeweiligen Batteriezellblocks, und mit einer Mehrzahl von Leistungsschaltelementen zum wahlweisen parallelen und/oder seriellen Verbinden der Batteriezellblöcke, wobei in einer ersten Verbindungsanordnung die Batteriezellblöcke parallel verbunden sind und an einem ersten Anschlusspunkt eine erste Spannung bereitgestellt ist und wobei in einer zweiten Verbindungsanordnung die Batteriezellblöcke in einer Reihenanordnung verbunden sind und die erste Spannung an dem ersten Anschlusspunkt und/oder eine zweite Spannung an einem zweiten Anschlusspunkt bereitgestellt ist.

Aus der DE 10 2013 113 182 A1 ist eine Zweispannungsbatterie mit einer Mehrzahl von Batteriezellblöcken bekannt, welche in einer ersten Verbindungsanordnung an einem ersten Anschlusspunkt eine erste Spannung bereitstellt zur Versorgung einer ersten Gruppe von elektrischen Verbrauchern und welche in einer zweiten Verbindungsanordnung an einem zweiten Anschlusspunkt eine zweite Spannung bereitstellt zur Versorgung einer zweiten Gruppe von elektrischen Verbrauchern. Das Verbringen der Batteriezellblöcke in die erste Verbindungsanordnung und/oder in die zweite Verbindungsanordnung erfolgt über eine Gruppe von Leistungsschaltelementen. Abhängig vom Schaltzustand der Leistungsschaltelemente sind die Batteriezellblöcke der gattungsgemäßen Zweispannungsbatterie parallel oder seriell miteinander verbunden. Beispielsweise dient die Zweispannungsbatterie der Energieversorgung in einem 12 V-Bordnetz und in einem 48 V-Bordnetz eines einzigen Fahrzeugs. Die zwei Spannungen können von der Zweispannungsbatterie insbesondere gleichzeitig über die zwei verschiedenen Anschlusspunkte zur Verfügung gestellt werden.

Aufgabe der vorliegenden Erfindung ist es, für die Zweispannungsbatterie eine Zellmonitor-Anordnung bereitzustellen, welche es in den verschiedenen Verbindungsanordnungen gleichermaßen erlaubt, eine über die Batteriezellblöcke bereitgestellte Spannung beziehungsweise einen Strom durch die Batteriezellblöcke zu überwachen und Informationen hierzu zentral bereitzustellen.

Zur Lösung der Aufgabe ist die Erfindung in Verbindung mit dem Oberbegriff des Patentanspruchs 1 dadurch gekennzeichnet, dass die Zellmonitore über eine Datenleitungsanordnung mit einem Mikrocontroller der Zweispannungsbatterie verbunden sind, wobei zwischen jedenfalls einzelnen Zellmonitoren und dem Mikrocontroller ein Spannungsniveauanpasser vorgesehen ist, durch den für ein Eingangsspannungssignal, welches an einem dem zugeordneten Zellmonitor zugeordneten Eingang des Spannungsniveauanpassers anliegt und welches in der ersten Verbindungsanordnung und in der zweiten Verbindungsanordnung ein unterschiedliches Spannungsniveau aufweist, in der ersten Verbindungsanordnung und in der zweiten Verbindungsanordnung der Batteriezellblöcke an einem mittelbar oder unmittelbar mit dem Mikrocontroller verbundenen Ausgang ein Ausgangsspannungssignal in einem vorspezifizierten Spannungsniveauintervall bereitstellt ist, dessen Intervallbreite geringer ist als eine Differenz zwischen dem Spannungsniveau des Eingangsspannungssignals in der ersten Verbindungsanordnung und in der zweiten Verbindungsanordnung. Das Spannungsniveauintervall für das Ausgangsspannungssignal ist dabei so gewählt, dass aufseiten des Mikrocontrollers zwischen einer logischen Null einerseits und einer logischen Eins andererseits unterscheidbar ist.

Der besondere Vorteil der Erfindung besteht darin, dass durch das Vorsehen des Spannungsniveauanpassers die Zellmonitore die Spannung der einzelnen Batteriezellen des jeweiligen Batteriezellblocks beziehungsweise der Strom durch die Batteriezellen sowohl in der ersten Verbindungsanordnung als auch in der zweiten Verbindungsanordnung erfassen können. Die Erfassung ist insofern unabhängig von einem Spannungsniveau der Batteriezellblöcke, welches sich jedenfalls für einzelne Batteriezellblöcke beim parallelen und beim seriellen Verschalten der Batteriezellblöcke unterscheidet. Während beim parallelen Verbinden der Batteriezellblöcke eine stets gleiche und niedrige Spannung, insbesondere die erste Spannung über den verschiedenen Batteriezellblöcken anliegt, addiert sich die Spannung der seriell verschalteten Batteriezellblöcke mit der Folge, dass gemeinsam eine höhere und insbesondere die zweite Spannung bereitgestellt ist. In der seriellen Anordnung liegen die verschiedenen Batteriezellblöcke demzufolge an einem unterschiedlichen Spannungsniveau. Die zur Überwachung der Batteriezellblöcke vorgesehenen Zellmonitore müssen daher im Zusammenwirken mit dem Mikrocontroller unabhängig von einem Spannungsniveau des zugeordneten Batteriezellblocks eine stets zuverlässige Überwachung erlauben und eine Information hierüber dem zentralen Mikrocontroller der Zweispannungsbatterie bereitstellen.

Der Spannungsniveauanpasser ist ausgebildet, um das von dem Zellmonitor bereitgestellte Eingangsspannungssignal zu wandeln und am Ausgang ein Ausgangsspannungssignal zur Verfügung zu stellen, welches mittelbar oder unmittelbar dem Mikrocontroller zur Verfügung gestellt und von diesem eingelesen, interpretiert beziehungsweise ausgewertet werden kann. Eine unmittelbare Auswertung des Ausgangsspannungssignals durch den Mikrocontroller erfolgt, wenn der Spannungsniveauanpasser unmittelbar mit dem Mikrocontroller verbunden ist. Eine mittelbare Auswertung sieht vor, dass zusätzliche Komponenten, beispielsweise ein weiterer Spannungsniveauanpasser oder ein weiterer Zellmonitor zwischengeschaltet sind. Das Spannungsniveauintervall für das Ausgangsspannungssignal ist dabei so gewählt, dass aufseiten des Mikrocontrollers zwischen einer logischen Null einerseits und einer logischen Eins andererseits unterschieden werden kann. Beispielsweise wird ein Spannungssignal im Bereich von 0 V bis 0,6 V als logische Null und ein Spannungsniveau oberhalb von mehr als 0,6 V bis etwa 5 V als logische Eins interpretiert.

Beispielsweise kann jedem Batteriezellblock ein Zellmonitor und jedem Zellmonitor ein Spannungsniveauanpasser zugeordnet sein. Es wird hierdurch sichergestellt, dass Signale von jedem Zellmonitor gewandelt und insbesondere gleich behandelt werden. Beispielsweise kann es durch das Vorsehen des Spannungsniveauanpassers zu einer Laufzeitänderung für das Signal kommen und durch das Vorsehen eines Spannungsniveauanpassers für jeden Zellmonitor die Gleichbehandlung der Signale erreicht werden. Es ist insbesondere einer Umkehrung einer Reihenfolge der Signale beim Empfang durch den Mikrocontroller vorgebeugt.

Nach einer bevorzugten Ausführungsform der Erfindung kann ein Spannungsniveauanpasser für jeden Zellmonitor vorgesehen sein, welcher einem Batteriezellblock zugeordnet ist, der nicht permanent mit dem Massepunkt der Zweispannungsbatterie verbunden ist. Vorteilhaft gibt sich hierdurch eine besonders kostengünstige Lösung, da die Anzahl der Spannungsniveauanpasser gering bleibt und für diejenigen Batteriezellblöcke beziehungsweise die ihnen zugeordneten Zellmonitore auf einem Spannungsniveauanpasser verzichtet wird, welche in der ersten Verbindungsanordnung und in der zweiten Verbindungsanordnung ein gleiches Spannungsniveau aufweisen beziehungsweise mit dem Massepunkt der Zweispannungsbatterie verbunden sind.

Nach einer Weiterbildung der Erfindung ist der Zellmonitor des ersten Batteriezellblocks über die Datenleitungsanordnung kapazitiv beziehungsweise galvanisch mit dem Mikrocontroller verbunden. Die kapazitive beziehungsweise galvanische Verbindung kann vorgesehen sein, da der erste Batteriezellblock der Zweispannungsbatterie in der ersten Verbindungsanordnung und in der zweiten Verbindungsanordnung an einem gleichen Spannungsniveau vorgesehen ist.

Nach einer Weiterbildung der Erfindung ist die Datenleitungsanordnung nach Art eines Netzwerks ausgebildet. Für die Kommunikation des Mikrocontrollers mit den Zellmonitoren sind dann beispielsweise Busdatenleitungen vorgesehen. Alternativ kann die Datenleitungsanordnung eine zu dem Mikrocontroller geführte erste Leitung und eine zu dem Mikrocontroller geführte zweite Leitung vorsehen, wobei dem Mikrocontroller über die erste Leitung und die zweite Leitung eine Spannungsdifferenz zugeführt ist und aus der Spannungsdifferenz das Ausgangsspannungssignal beziehungsweise eine Information über einen Zustand der Batteriezellblöcke bestimmt wird.

Der Mikrocontroller kann nach der Erfindung singulär der Zweispannungsbatterie zugeordnet sein. Eine Anordnung des Mikrocontrollers kann in einem Gehäuse der Zweispannungsbatterie erfolgen oder außerhalb desselben.

Nach einer Weiterbildung der Erfindung kann ein Übertrager mit einer induktiven Entkopplung als ein Spannungsniveauanpasser vorgesehen sein, wobei der Übertrager eine mit dem Mikrocontroller verbundene Mikrocontrollerwicklung und eine mit dem Zellmonitor verbundene Zellmonitorwicklung vorsieht. Der Übertrager kann als Transformator ausgebildet sein.

Nach einer Weiterbildung der Erfindung kann einer Mehrzahl von Zellmonitoren ein gemeinsamer Übertrager zugeordnet sein. Der gemeinsame Übertrager weist eine Mehrzahl von Zellmonitorwicklungen auf, wobei jeder Zellmonitor mit wenigstens einer Zellmonitorwicklung des gemeinsamen Übertragers zusammenwirkt. Weiter ist eine gemeinsame Mikrocontrollerwicklung für wenigstens zwei und bevorzugt alle Zellmonitorwicklungen des Übertragers vorgesehen. Vorteilhaft ergeben sich durch den gemeinsamen Übertrager und die gemeinsame Mikrocontrollerwicklung ein kompakter Aufbau und - hieraus resultierend - ein geringer Bauraumbedarf und/oder ein Kostenvorteil.

Nach einer Weiterbildung der Erfindung ist als Spannungsniveauanpasser eine Pegelwandlerschaltung mit galvanischer Kupplung vorgesehen. Die Pegelwandlerschaltung ist zwischen zwei Batteriezellblöcken angeordnet, die in der zweiten Verbindungsanordnung zueinander benachbart sind. Vorteilhaft ist das Vorsehen einer galvanischen Kupplung mittels Pegelwandlerschaltung mit vergleichsweise geringen Kosten verbunden.

Nach einer Weiterbildung der Erfindung sieht die Pegelwandlerschaltung einen ersten Schaltungspfad für die Signalübertragung von dem Zellmonitor zu dem Mikrocontroller und einen zweiten Schaltungspfad für die Signalübertragung von dem Mikrocontroller zu dem Zellmonitor vor. Es wird hierdurch vorteilhaft eine getrennte Anpassung des Spannungsniveaus für die Signalübertragung in den zwei Schaltungspfaden möglich.

Die Pegelwandlerschaltung kann nach einer Weiterbildung der Erfindung als integrierte Schaltung ausgebildet sein. Beispielsweise kann die Pegelwandlerschaltung als Teil der zugeordneten Zellmonitore realisiert und insbesondere räumlich in die Zellmonitore integriert sein. Ebenso sind ein diskreter Aufbau der Pegelwandlerschaltung und/oder eine räumlich separate Ausführung derselben nach der Erfindung möglich.

Nach einer Weiterbildung der Erfindung sind in der zweiten Verbindungsanordnung mehr als zwei Batteriezellblöcke seriell miteinander verschaltet. Es ist hier zwischen je zwei in der zweiten Verbindungsanordnung benachbarten Batteriezellblöcken immer ein Spannungsniveauanpasser vorgesehen. Bevorzugt sind alle Spannungsniveauanpasser baugleich ausgeführt. Durch das Vorsehen der baugleichen Ausführung der Spannungsniveauanpasser ergibt sich ein Kostenvorteil. Überdies ist die regelmäßige Anordnung der Spannungsniveauanpasser vorteilhaft. Es vereinfacht die Kommunikation über die Datenleitungsanordnung und die Installation beziehungsweise Montage.

Nach einer Weiterbildung der Erfindung erfolgt die Übertragung der Signale an dem Mikrocontroller beziehungsweise die Übertragung der Signale von dem Mikrocontroller an die Zellmonitore kaskadierend derart, dass nur der erste Batteriezellblock über die Datenleitungsanordnung unmittelbar mit dem Mikrocontroller zusammenwirkt und alle weiteren Batteriezellblöcke beziehungsweise die ihnen zugeordneten Zellmonitore über den ersten Batteriezellblock mit dem Mikrocontroller kommunizieren. Die weiteren Batteriezellblöcke wirken insofern nur mittelbar mit dem Mikrocontroller zusammen beziehungsweise sind nur mittelbar mit dem Mikrocontroller verbunden.

Nach einer Weiterbildung der Erfindung ist in dem ersten Spannungspfad der Pegelwandlerschaltung ein erstes Schaltmodul mit wenigstens einem Schaltelement, mit einem dem Schaltelement zugeordneten Schalteingang und mit einem Signalausgang vorgesehen. Abhängig von einem an dem Schalteingang des Schaltelements anliegenden Eingangsschaltsignals ist das wenigstens eine Schaltelement in einem ersten Schaltzustand oder in einem zweiten Schaltzustand vorgesehen. In den verschiedenen Schaltzuständen des Schaltelements ist ein Widerstand oder sind mehrere Widerstände des ersten Schaltmoduls in der Weise unterschiedlich verschaltet, dass das Spannungsniveau an dem Signalausgang des ersten Schaltmoduls in dem ersten Schaltzustand des Schaltelements - bezogen auf eine gleiche Differenzspannung an zwei Spannungsanschlüssen des ersten Schaltungsmoduls - ein anderes ist als das Spannungsniveau des Signalausgangs in dem zweiten Schaltzustand. Analog kann in dem zweiten Spannungspfad der Pegelwandlerschaltung ein zweites Schaltmodul mit ebenfalls wenigstens einem Schaltelement, mit einem dem Schaltelement zugeordneten Schalteingang und mit einem Signalausgang vorgesehen sein. Abhängig von einem an dem Schalteingang des Schaltelements anliegenden Eingangsschaltsignals ist das Schaltelement des zweiten Schaltmoduls in einem ersten Schaltzustand oder in einem zweiten Schaltzustand vorgesehen und ein Widerstand beziehungsweise mehrere Widerstände des zweiten Schaltmoduls sind abhängig vom Schaltzustand derart unterschiedlich verschaltet, dass - bezogen auf eine gleiche Differenzspannung an zwei Spannungsanschlüssen des zweiten Schaltungsmoduls - das Spannungsniveau an dem Signalausgang des zweiten Schaltmoduls abhängig vom Schaltzustand des Schaltelements unterschiedlich ist. Vorteilhaft kann durch das Vorsehen des ersten Schaltmoduls und/oder des zweiten Schaltmoduls für die verschiedenen Spannungspfade der Pegelwandlerschaltung die Anpassung des Spannungsniveaus individuell und bedarfsgerecht erfolgen. Als Schaltelemente kommen beispielsweise Transistoren beziehungsweise digitale Transistoren, MOSFET oder andere steuerbare Halbleiterschaltelemente in Frage.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Die Zeichnungen dienen lediglich beispielhaft der Klarstellung der Erfindung und haben keinen einschränkenden Charakter.

Anhand der beigefügten Zeichnungen wird die Erfindung nachfolgend näher erläutert. Dabei zeigt:
- Fig. 1: eine Prinzipdarstellung einer erfindungsgemäßen Zweispannungsbatterie mit einer Mehrzahl von Batteriezellblöcken, welche in einer ersten Verbindungsanordnung oder in einer zweiten Verbindungsanordnung miteinander verschaltet werden können,
- Fig. 2: eine erste Schaltungskonfiguration für eine Mehrzahl von den Batteriezellblöcken zugeordneten Zellmonitoren der Zweispannungsbatterie in der zweiten Verbindungsanordnung,
- Fig. 3: eine zweite Schaltungskonfiguration für die Zellmonitore der Zweispannungsbatterie nach Fig. 1 in der zweiten Verbindungsanordnung,
- Fig. 4: eine Detaildarstellung eines Schaltmoduls Z der Schaltungsanordnung nach Fig. 3,
- Fig. 5: eine Detaildarstellung eines Schaltmoduls Y der Schaltungsanordnung nach Fig. 3 und
- Fig. 6: die Schaltungskonfiguration der Zellmonitore der Zweispannungsbatterie nach Fig. 3 in der ersten Verbindungsanordnung.

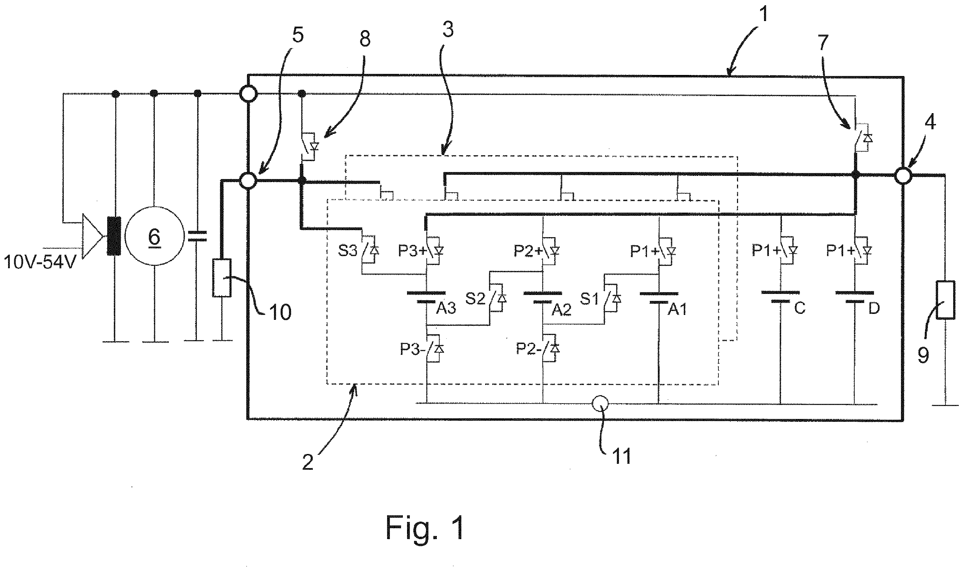

Eine Zweispannungsbatterie 1 gemäß Fig. 1 umfasst insgesamt acht Batteriezellblöcke A1, A2, A3, C, D, welche jeweils durch eine Mehrzahl von in Reihe verschalteten, nicht einzeln dargestellten Batteriezellen gebildet sind. Von den insgesamt acht Batteriezellblöcke A1, A2, A3, C, D bilden ein erster Batteriezellblock A1, ein zweiter Batteriezellblock A2 sowie ein dritter Batteriezellblock A3 eine erste Gruppe 2 von Batteriezellblöcke A1, A2, A3. Zu der ersten Gruppe 2 von Batteriezellblöcken A1, A2, A3 sind zwei vierte Batteriezellblöcke C, D sowie eine in dem Prinzipschaltbild nach Fig. 1 verdeckt angeordnete zweite Gruppe 3 mit drei weiteren, nicht einzeln dargestellten Batteriezellblöcken parallel verschaltet.

Den Batteriezellblöcken A1, A2, A3, C, D sind als Leistungsschaltelemente Parallelverbindungsschalter P1+, P2+, P2-, P3+, P3- und Serienverbindungsschalter S1, S2, S3 zugeordnet. Die Zuordnung der Leistungsschaltelemente P1+, P2+, P2-, P3+, P3-, S1, S2, S3 zu den Batteriezellblöcken A1, A2, A3, C, D erfolgt so, dass in einer ersten Verbindungsanordnung der Zweispannungsbatterie 1 alle Batteriezellblöcke A1, A2, A3, C, D zueinander parallel verschaltet sind. Es sind also der erste Batteriezellblock A1, der zweite Batteriezellblock A2 und der dritte Batteriezellblock A3 der ersten Gruppe 2 von Batteriezellblöcken A1, A2, A3 zueinander parallel. Überdies sind die Batteriezellblöcke der zweiten Gruppe 3 von Batteriezellblöcken zueinander parallel sowie parallel zu den Batteriezellblöcken A1, A2, A3 der ersten Gruppe 2 von Batteriezellblöcken A1, A2, A3. Die beiden Gruppen 2, 3 von Batteriezellblöcken A1, A2, A3 sind wiederum parallel zu den vierten Batteriezellblöcken C, D verschaltet. In der ersten Verbindungsanordnung ist an einem ersten Anschlusspunkt 4 der Zweispannungsbatterie 1 eine erste Spannung bereitgestellt.

In der zweiten Verbindungsanordnung sind der erste Batteriezellblock A1, der zweite Batteriezellblock A2 und der dritte Batteriezellblock A3 der ersten Gruppe 2 von Batteriezellblöcken A1, A2, A3 zueinander seriell beziehungsweise in Reihe verschaltet. Ebenso sind die Batteriezellblöcke der zweiten Gruppe 3 von Batteriezellblöcken zueinander in Reihe verschaltet. In der zweiten Verbindungsanordnung wird an einem zweiten Anschlusspunkt 5 der Zweispannungsbatterie 1 eine zweite Spannung bereitgestellt. Die zweite Spannung ist aufgrund der seriellen Anordnung der Batteriezellblöcke A1, A2, A3 höher als die erste Spannung.

Optional kann in der zweiten Verbindungsanordnung zusätzlich die erste Spannung an dem ersten Anschlusspunkt 4 bereitgestellt werden. Zur Bereitstellung der ersten Spannung dienen die zwei vierten Batteriezellblöcke C, D und optional zusätzlich der erste Batteriezellblock A1 der ersten Gruppe 2 von Batteriezellblöcken A1, A2, A3 sowie ein korrespondierender erster Batteriezellblock der zweiten Gruppe 3 von Batteriezellblöcken.

Beispielsweise wird von der Zweispannungsbatterie 1 bezogen auf einen Massepunkt 11 eine erste Spannung von 12 V an dem ersten Anschlusspunkt 4 und/oder eine zweite Spannung von 48 V effektiv (nominell 36 V) an dem zweiten Anschlusspunkt 5 bereitgestellt. Der Zweispannungsbatterie 1 ist optional ein Starter-Generator 6 zugeordnet. Der Starter-Generator 6 kann wahlweise über ein erstes Leistungsschaltelement 7 bei der ersten Spannung oder über ein zweites Leistungsschaltelement 8 bei der zweiten Spannung verbunden werden. Der Starter-Generator 6 kann von der Zweispannungsbatterie 1 betrieben oder im generatorischen Betrieb genutzt werden, um Bremsenergie in elektrische Energie zu wandeln und in die Zweispannungsbatterie 1 zu speisen.

An dem ersten Anschlusspunkt 4 der Zweispannungsbatterie 1 ist wenigstens ein erster elektrischer Verbraucher 9 angeschlossen, welcher bei der ersten Spannung betrieben wird. An dem zweiten Anschlusspunkt 5 der Zweispannungsbatterie 1 kann in analoger Weise wenigstens ein zweiter elektrischer Verbraucher 10 angeschlossen sein. Der zweite elektrische Verbraucher 10 wird bei der zweiten Spannung betrieben.

Den verschiedenen Batteriezellblöcken A1, A2, A3, C, D der Zweispannungsbatterie 1 sind erfindungsgemäß Zellmonitore Z1, Z2, Z3 zur Überwachung der Batteriezellblöcke zugeordnet, die in der Prinzipdarstellung gemäß Fig. 1 der Übersichtlichkeit halber nicht dargestellt sind.

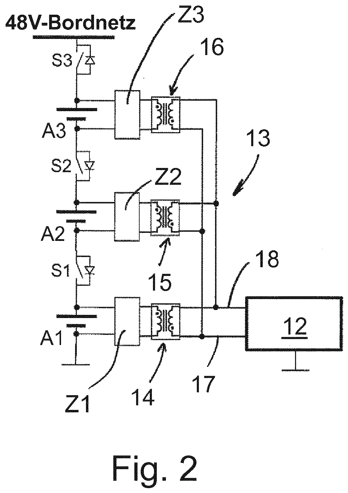

Fig. 2 zeigt die Batteriezellblöcke A1, A2, A3 der ersten Gruppe 2 von Batteriezellblöcken A1, A2, A3 in der zweiten Verbindungsanordnung, in der die Batteriezellblöcke A1, A2, A3 seriell miteinander verschaltet sind. Ebenfalls dargestellt sind die den Batteriezellblöcken A1, A2, A3 zugeordneten Zellmonitore Z1, Z2, Z3 sowie ein Mikrocontroller 12 der Zweispannungsbatterie 1. Der Mikrocontroller 12 ist über eine Datenleitungsanordnung 13 mit den Zellmonitoren Z1, Z2, Z3 verbunden. Zwischen den Zellmonitoren Z1, Z2, Z3 einerseits und dem Mikrocontroller 12 andererseits sind zudem Transformatoren 14, 15, 16 als Spannungsniveauanpasser beziehungsweise Übertrager mit einer induktiven Entkopplung vorgesehen. Die Transformatoren 14, 15, 16 weisen jeweils eine den Zellmonitoren Z1, Z2, Z3 zugeordnete Zellmonitorwicklung und eine mit der Zellmonitorwicklung zusammenwirkende, dem Mikrocontroller 12 zugeordnete Mikrocontrollerwicklung auf. Mikrocontrollerseitig sind den Transformatoren 14, 15, 16 eine erste Leitung 17 sowie eine zweite Leitung 18 zugeordnet, welche zu dem Mikrocontroller 12 geführt sind und als Teil der Datenleitungsanordnung 13 ausgebildet sind.

Die Zellmonitore Z1, Z2, Z3 sind ausgebildet zur Überwachung einer von einzelnen Batteriezellen des zugeordneten Batteriezellblocks A1, A2, A3 bereitgestellten Spannung beziehungsweise eines Stroms durch die Batteriezellen des jeweiligen Batteriezellblocks A1, A2, A3. Die Information über die Spannung beziehungsweise den Strom übertragen die Zellmonitore Z1, Z2, Z3 an den Mikrocontroller 12, welcher insofern die Informationen über die ordnungsgemäße Funktion beziehungsweise einen Defekt der Batteriezellblöcke A1, A2, A3 vorliegen hat. Es ist hierbei so, dass von den Zellmonitoren Z1, Z2, Z3 ein Ausgangssignal an die als Spannungsniveauanpasser fungierenden Transformatoren 14, 15, 16 gelangt. Das Signal der Zellmonitore Z1, Z2, Z3 wird dort als Eingangsspannungssignal anliegen und entsprechend der Wicklungskonfiguration in ein Ausgangsspannungssignal gewandelt, welches in einem vorspezifizierten Spannungsniveauintervall liegt. Das Ausgangsspannungssignal gelangt über die Datenleitungsanordnung 13 mit der ersten Leitung 17 und der zweiten Leitung 18 zu dem Mikrocontroller 12. Der Mikrocontroller 12 wertet eine Spannungsdifferenz zwischen den Leitungen 17, 18 aus.

In der seriellen Anordnung der Batteriezellblöcke A1, A2, A3 gemäß Fig. 2 ist der erste Batteriezellblock A1 gegen Masse verschaltet. Er stellt eine nominelle Spannung von 12 V bereit, welche als Grundspannung für den zweiten Batteriezellblock A2 dient. Der zweite Batteriezellblock A2 stellt wiederum eine 12 V Spannung nominell bereit, sodass der dritte Batteriezellblock A3 an 24 V anliegt und wiederum 12 V nominell bereitstellt. Nominell liegen daher über der ersten Gruppe 2 von Batteriezellblöcken A1, A2, A3 36 V Spannung (effektiv: 48 V). Während vonseiten des dem ersten Batteriezellblock A1 zugeordneten Zellmonitors Z1 eine Signalspannung zwischen 0 V und 5 V als Eingangsspannungssignal für den zugeordneten Transformator 14 bereitgestellt ist, liegen als Eingangsspannungssignal für den Transformator 15 des dem zweiten Batteriezellblocks A2 zugeordneten Zellmonitors Z2 eine um einen Offset von 12 V höhere Spannung, nämlich 12 V bis 17 V an. In analoger Weise liegen an dem Transformator 16 des dem dritten Batteriezellblocks A3 zugeordneten Zellmonitors Z3 24 V bis 29 V an. Die Transformatoren 14, 15, 16 sind nun so ausgebildet, dass an der Mikrocontrollerwicklung jeweils ein Ausgangsspannungssignal von 0 V bis 5 V bereitgestellt ist als Eingangssignal für den Mikrocontroller 12. Beispielsweise kann vonseiten des Mikrocontrollers 12 eine Spannung im Bereich von 0 V bis 0,6 V als logische Null und als Hinweis auf eine nicht korrekte Funktionsweise eines Batteriezellblocks A1, A2, A3 und einer Eingangsspannung im Bereich von 0,6 V oder mehr als logische Eins und als Hinweis auf ein ordnungsgemäßes Funktionieren der Batteriezellblöcke A1, A2, A3 aufgefasst werden.

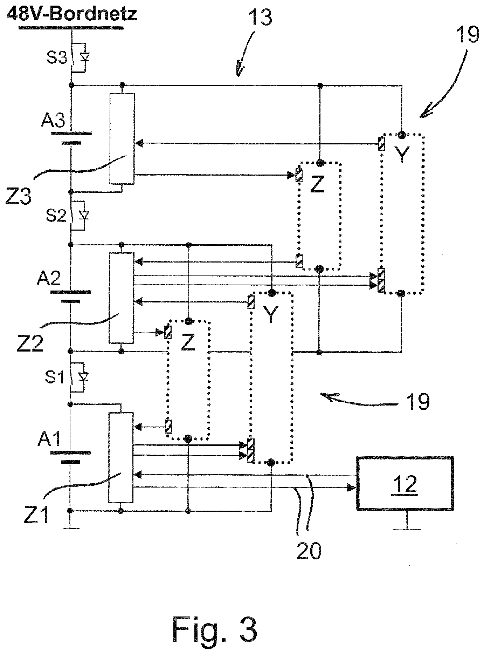

Nach einer alternativen Ausführungsform der Erfindung gemäß der Fig. 3 bis 6 ist als Spannungsniveauanpasser eine Pegelwandlerschaltung 19 vorgesehen, die zusammen mit der Datenleitungsanordnung 13 der Verbindung der Zellmonitore Z1, Z2, Z3 mit dem Mikrocontroller 12 dient. Die Kommunikation der Zellmonitore Z1, Z2, Z3 mit dem Mikrocontroller 12 erfolgt insofern galvanisch gekoppelt.

Es ist in der seriellen Anordnung der Batteriezellblöcke A1, A2, A3 der ersten Gruppe 2 von Batteriezellblöcken A1, A2, A3 gemäß Fig. 3 je eine Pegelwandlerschaltung 19 zwischen dem ersten Batteriezellblock A1 und dem zweiten Batteriezellblock A2 einerseits und dem zweiten Batteriezellblock A2 sowie dem dritten Batteriezellblock A3 andererseits vorgesehen. Von dem ersten Batteriezellblock A1, der dauerhaft mit dem Massepunkt 11 der Zweispannungsbatterie 1 verbunden ist, ist überdies eine Datenbusleitung 20 zu dem Mikrocontroller 12 vorgesehen. Die Signalübertragung zwischen dem Mikrocontroller 12 einerseits und den Zellmonitoren Z1, Z2, Z3 andererseits erfolgt dabei über zwei getrennte Schaltungspfade. Ein erster Schaltungspfad dient der Signalübertragung von dem Zellmonitor Z1, Z2, Z3 zu dem Mikrocontroller 12 und ein zweiter Schaltungspfad der Signalübertragung von dem Mikrocontroller 12 zu den Zellmonitoren Z1, Z2, Z3. Die Pegelwandlerschaltung 19 kann diskret ausgebildet sein oder durch einen integrierten Schaltkreis gebildet werden, welcher beispielsweise auch räumlich in die Zellmonitore Z1, Z2, Z3 selbst integriert sein kann.

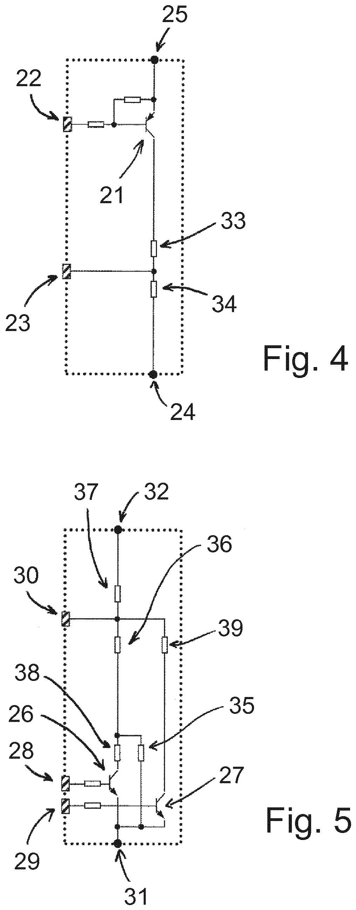

In den ersten Spannungspfad der Pegelwandlerschaltung 19 sind für die Kommunikation von dem Zellmonitor Z1, Z2, Z3 zu dem Mikrocontroller 12 zwei baugleiche erste Schaltmodule Z vorgesehen. Das erste Schaltmodul Z ist in Fig. 4 im Detail dargestellt. Es umfasst ein Schaltelement 21, welches bevorzugt als Transistor beziehungsweise Digitaltransistor ausgebildet ist, einen dem Schaltelement 21 zugeordneten Schalteingang 22 sowie einen Signalausgang 23. An dem ersten Schaltmodul Z sind überdies zwei Spannungsanschlüsse 24, 25 vorgesehen.

Der zweite Schaltungspfad, über den die Signalübertragung von dem Mikrocontroller 12 zu den Zellmonitoren Z1, Z2, Z3 erfolgt, sieht zwei baugleiche zweite Schaltmodule Y vor. Ein zweites Schaltmodul Y ist in Fig. 5 detailliert gezeigt. Das zweite Schaltmodul Y sieht zwei Schaltelemente 26, 27 mit jeweils einem den Schaltelementen 26, 27 zugeordneten Schalteingang 28, 29 vor. Überdies ist ein Signalausgang 30 vorgesehen. Des Weiteren sind für das zweite Schaltmodul Y zwei Spannungsanschlüsse 31, 32 gebildet.

Für die Serienverschaltung der Batteriezellblöcke A1, A2, A3 nach Fig. 3 ist für den ersten Spannungspfad (Signalübertragung von dem Zellmonitor Z1, Z2, Z3 zu dem Mikrocontroller 12) die Spannungsdifferenz über den Spannungsanschlüssen 24, 25 des ersten Schaltmoduls Z beziehungsweise die Spannungsanschlüsse 31, 32 des zweiten Schaltmoduls Y jeweils 24 V nominell. Über den Zellmonitoren Z1, Z2, Z3 liegt jeweils eine Spannungsdifferenz von 12 V, wobei der dem ersten Batteriezellblock A1 zugeordnete erste Zellmonitor Z1 zwischen 0 V und 12 V nominell arbeitet, der dem zweiten Batteriezellblock A2 zugeordnete zweite Zellmonitor Z2 zwischen 12 V und 24 V nominell und der dem dritten Batteriezellblock A3 zugeordnete dritte Zellmonitor Z3 zwischen 24 V und 36 V nominell arbeitet.

Am Beispiel der Pegelwandlerschaltung 19 zwischen dem zweiten Batteriezellblock A2 und dem ersten Batteriezellblock A1 wird nachfolgend die Funktionsweise des Spannungsniveauanpassers in der seriellen Anordnung getrennt für den ersten Schaltungspfad und den zweiten Schaltungspfad exemplarisch erläutert. Angenommen ist hierbei, dass die Ports für die Kommunikation jedes Zellmonitors Z1, Z2, Z3 für einen Spannungsbereich von 0 V bis 5 V relativ zu der unteren Versorgungsspannung ausgelegt sind. Demnach kann das Signal für den ersten Signalpfad beim zweiten Zellmonitor Z2 12 V oder 17 V betragen - abhängig von den jeweils zu übertragenden Bit. Es muss für das Ausgangssignal das Spannungsnivauintervall von 0 V bis 5 V übertragen werden, damit dies über den Mikrocontroller 12 beziehungsweise den ersten Zellmonitor Z1 auswertbar ist. Analog wird ein Mikrocontrollersignal im Bereich von 0 V bis 5 V über den zweiten Schaltungspfad in ein Signal für den zweiten Zellmonitor Z2 im Bereich von 12 V bis 17 V gewandelt.

Das aus dem zweiten Zellmonitor Z2 kommende Signal liegt im Bereich von 12 V beziehungsweise 17 V. Es wird über den Schalteingang 22 dem ersten Schaltmodul Z zugeordnet, wobei das Schaltelement 21 des ersten Schaltmoduls Z als PNP-Transistor ausgebildet ist, welcher bei einer eingehenden logischen Null leitend geschaltet ist. Da über den Spannungsanschlüssen 24, 25 in der seriellen Anordnung (zweite Verbindungsanordnung) eine Spannungsdifferenz von 24 V liegt, kann über den Spannungsteiler für zwei Widerstände 33, 34 ein Signal von 5 V abgegriffen werden, sofern der Transistor 21 leitet. Leitet der Transistor 21 nicht, liegen am Signalausgang 23 0 V an. Zu beachten ist hierbei, dass bei einer logischen Eins am Schalteingang 22 das Schaltelement 21 sperrt und somit eine logische Null (0 V) am Signalausgang 23 anliegt. Bei einer logischen Null am Schalteingang 22 leitet der Transistor 21 und am Signalausgang 23 liegt eine logische Eins an. Das erste Schaltmodul Z hat somit invertierenden Charakter.

Für den zweiten Schaltungspfad wird in der seriellen Konfiguration das zweite Schaltelement 27 des zweiten Schaltmoduls Y sperrend gestaltet. Es liegt insofern am zweiten Schalteingang 29 dauerhaft eine logische Null an. Allein der erste Schalteingang 28 des zweiten Schaltmoduls Y wird in der seriellen Konfiguration zum Schalten beziehungsweise Übertragen verwendet. Bei einer logischen Null am Schalteingang 28 des ersten Schaltelements 26 sperrt das erste Schaltelement 26. Am Signalausgang 30 liegt dann eine Spannung an, welche sich unter Berücksichtigung der Spannung über den Spannungsanschlüssen 31, 32 allein über den Spannungsteiler ergibt, welcher über die Widerstände 35, 36, 37 gebildet ist. Bei einer logischen Eins am Schalteingang 28 leitet das Schaltelement 26 und die Spannung am Signalausgang 30 wird über den durch die Widerstände 36, 37, 38 gebildeten Spannungsteiler sowie den parallel verschalteten, nicht schaltbaren Widerstand 35 definiert. Die Widerstände 35, 36, 37, 38 sind dabei so gewählt, dass bei sperrendem Schaltelement 26 eine Ausgangsspannung von näherungsweise 17 V und bei leitendem Schaltelement eine Ausgangsspannung von nahe 12 V eingestellt ist.

Eine Konfiguration der Pegelwandlerschaltung 19, welche zwischen dem dritten Batteriezellblock A3 und dem zweiten Batteriezellblock A2 vorgesehen ist, ist analog gewählt. Die Schaltungspfade sowie das erste Schaltmodul Z und das zweite Schaltmodul Y sind in gleichartig aufgebaut. Die Funktion und Signalübertragung erfolgt gleichartig unter der Prämisse, dass in der seriellen Schaltungsanordnung gemäß Fig. 3 das Spannungsniveau für den zweiten Zellmonitor 12 V bis 24 V und für den dritten Zellmonitor 24 V und 36 V nominell beträgt und dass über den Spannungsanschlüssen 24, 25, 31, 32 12 V bis 36 V nominell, das heißt eine Spannungsdifferenz von 24 V anliegt. Die Schalteingänge 22, 28, 29 sowie die Signalausgänge 23, 30 der Schaltmodule Z, Y liegen jeweils um 12 V oberhalb der vorstehend diskutierten Konfiguration.

Eine Signalübertragung von dem Mikrocontroller 12 zu dem ersten Batteriezellblock A1 erfolgt allein über die Busdatenleitung 20. Ein von dem Mikrocontroller 12 zu dem zweiten Batteriezellblock A2 übertragenes Signal wird über den ersten Batteriezellblock A1 und von dort über das erste Schaltmodul Z der Pegelwandlerschaltung 19 zu dem zweiten Batteriezellblock A2 übertragen. Eine Signalübertragung von dem Mikrocontroller 12 an den dritten Batteriezellblock A3 erfolgt über den ersten Batteriezellblock A1, das erste Schaltmodul Z, den zweiten Batteriezellblock A2 und das weitere erste Schaltmodul Z zum dritten Batteriezellblock A3.

In analoger Weise erfolgt die Übertragung des Signals von den Batteriezellblöcken A1, A2, A3 zu dem Mikrocontroller 12 kaskadierend in der Art, dass von dem dritten Batteriezellblock A3 ein Signal über das zweite Schaltmodul Y an den zweiten Batteriezellblock A2 und von dort über das weitere zweite Schaltmodul Y an den ersten Batteriezellblock A1 übertragen wird. Von dem zweiten Batteriezellblock A2 wird das Signal über das zweite Schaltmodul Y an den ersten Batteriezellblock A1 und von dort an den Mikrocontroller 12 übertragen. Die Übertragung von dem ersten Batteriezellblock A1 zu dem Mikrocontroller 12 erfolgt über die Datenbusleitung 20.

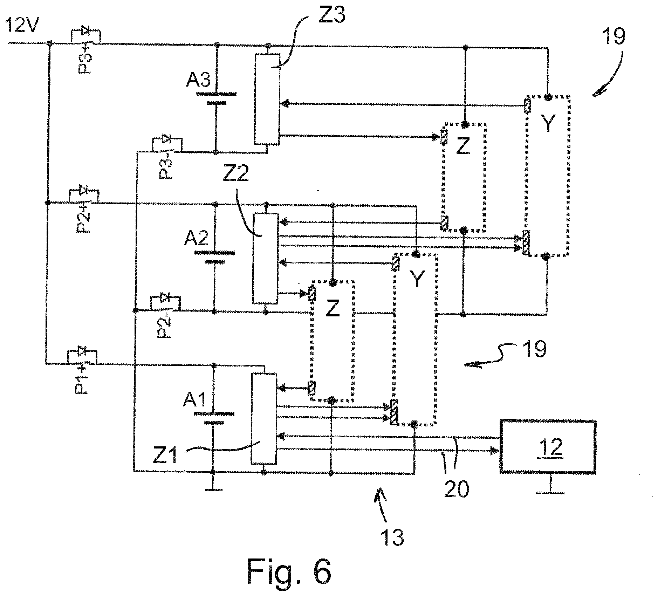

In der parallelen Konfiguration der Batteriezellblöcke A1, A2, A3 der ersten Gruppe 2 von Batteriezellblöcken A1, A2, A3 gemäß Fig. 6 liegen alle Zellmonitore Z1, Z2, Z3 sowie die Schaltmodule Z, Y an einer Spannungsdifferenz von 12 V zwischen 0 V und 12 V. Die Funktionsweise des ersten Schaltmoduls Z ist hierbei analog zu der vorherigen Darstellung. Allerdings liegt an dem Signalausgang 23 eine Spannung von 0 V beziehungsweise etwa 2,5 V an. Der Unterschied im Spannungsniveau ist jedoch so ausreichend groß, dass sowohl von einem Eingangsport des Zellmonitors Z1, Z2, Z3 zwischen einer logischen Null und einer logischen Eins unterschieden wird als auch von dem Mikrocontroller 12.

Für das zweite Schaltmodul Y wird in der parallelen Konfiguration das erste Schaltelement 26 dauerhaft leitend geschaltet und das zweite Schaltelement 27 betätigt. Bei einer logischen Null am zweiten Schalteingang 29 sperrt das zweite Schaltelement 27 und der Spannungsabfall über den Widerstand 39 hat keinen Einfluss auf den Signalausgang 30. Leitet hingegen das zweite Schaltelement 27 bei einer logischen Eins am Eingang 29, ist der Signalausgang 30 über den Widerstand 39 mitbestimmt. Die Widerstände 35, 36, 37, 38 einerseits sowie der nur in der parallelen Konfiguration relevante Widerstand 39 sind so gewählt, dass bei einem sperrenden Transistor 27 eine Ausgangsspannung von 5 V nominell und bei einem leitenden Transistor 27 eine Ausgangsspannung von 0 V nominell eingestellt sind. Es ist hierbei so, dass das zweite Schaltmodul Y ebenfalls einen invertierenden Charakter hat. Eine logische Eins am Eingang 29 des Transistors führt zu einer logischen Null am Ausgang 30 beziehungsweise eine logische Null am Eingang 29 zu einer logischen Eins am Ausgang 30.

Gleiche Bauteile und Bauteilfunktionen sind durch gleiche Bezugszeichen gekennzeichnet.

### Bezugszeichenliste

- 1: Zweispannungsbatterie
- 2: Gruppe von Batteriezellblöcken
- 3: Gruppe von Batteriezellblöcken
- 4: Anschlusspunkt
- 5: Anschlusspunkt
- 6: Starter-Generator
- 7: Leistungsschaltelement
- 8: Leistungsschaltelement
- 9: Verbraucher
- 10: Verbraucher
- 11: Massepunkt
- 12: Mikrocontroller
- 13: Datenleitungsanordnung
- 14: Transformator
- 15: Transformator
- 16: Transformator
- 17: Leitung
- 18: Leitung
- 19: Pegelwandlerschaltung
- 20: Datenbusleitung
- 21: Schaltelement
- 22: Schalteingang
- 23: Signalausgang
- 24: Spannungsanschluss
- 25: Spannungsanschluss
- 26: Schaltelement
- 27: Schaltelement
- 28: Schalteingang
- 29: Schalteingang
- 30: Signalausgang
- 31: Spannungsanschluss
- 32: Spannungsanschluss
- 33: Widerstand
- 34: Widerstand
- 35: Widerstand
- 36: Widerstand
- 37: Widerstand
- 38: Widerstand
- 39: Widerstand
- A1: Batteriezellblock
- A2: Batteriezellblock
- A3: Batteriezellblock
- C: Batteriezellblock
- D: Batteriezellblock
- P1+: Leistungsschaltelement
- P2+: Leistungsschaltelement
- P2-: Leistungsschaltelement
- P3+: Leistungsschaltelement
- P3-: Leistungsschaltelement
- S1: Leistungsschaltelement
- S2: Leistungsschaltelement
- S3: Leistungsschaltelement
- Y: Schaltmodul
- Z: Schaltmodul
- Z1: Zellmonitor
- Z2: Zellmonitor
- Z3: Zellmonitor

## Patentansprüche

1. Zweispannungsbatterie (1) für ein Fahrzeug
- mit einem Massepunkt (11),
- mit einer Mehrzahl von Batteriezellen,
- wobei Gruppen (2, 3) von in Reihe verschalteten Batteriezellen Batteriezellblöcke (A1, A2, A3) bilden und
- wobei wenigstens ein erster Batteriezellblock (A1) permanent mit dem Massepunkt (11) der Zweispannungsbatterie (1) verbunden ist,
- mit einer Mehrzahl von Zellmonitoren (Z1, Z2, Z3) für die Batteriezellblöcke (A1, A2, A3),
- wobei die Zellmonitore (Z1, Z2, Z3) ausgebildet sind zum Überwachen einer von den einzelnen Batteriezellen des jeweiligen Batteriezellblocks (A1, A2, A3) bereitgestellten Spannung und/oder eines Stroms durch die Batteriezellen des jeweiligen Batteriezellblocks (A1, A2, A3), und
- mit einer Mehrzahl von Leistungsschaltelementen (P1+, P2+, P2-, P3+, P3-, S1, S2, S3) zum wahlweisen parallelen und/oder seriellen Verbinden der Batteriezellblöcke (A1, A2, A3),
- wobei in einer ersten Verbindungsanordnung die Batteriezellblöcke (A1, A2, A3) parallel verbunden sind und an einem ersten Anschlusspunkt (4) eine erste Spannung bereitgestellt ist und
- wobei in einer zweiten Verbindungsanordnung die Batteriezellblöcke (A1, A2, A3) in einer Reihenanordnung verbunden sind und die erste Spannung an dem ersten Anschlusspunkt (4) und/oder eine zweite Spannung an einem zweiten Anschlusspunkt (5) bereitgestellt ist,
**dadurch gekennzeichnet,**
- **dass** die Zellmonitore (Z1, Z2, Z3) über eine Datenleitungsanordnung (13) mit einem Mikrocontroller (12) der Zweispannungsbatterie (1) verbunden sind,
- wobei zwischen jedenfalls einzelnen Zellmonitoren (Z1, Z2, Z3) und dem Mikrocontroller (12) wenigstens ein Spannungsniveauanpasser (14, 15, 16, 19) vorgesehen ist, durch den für ein Eingangsspannungssignal, welches an einem dem zugeordneten Zellmonitor (Z1, Z2, Z3) zugeordneten Eingang des Spannungsniveauanpassers (14, 15, 16, 19) anliegt und welches in der ersten Verbindungsanordnung und in der zweiten Verbindungsanordnung ein unterschiedliches Spannungsniveau aufweist, in der ersten Verbindungsanordnung und in der zweiten Verbindungsanordnung der Batteriezellblöcke (A1, A2, A3) an einem mit dem Mikrocontroller (12) unmittelbar oder mittelbar verbundenen Ausgang des Spannungsniveauanpassers (14, 15, 16, 19) ein Ausgangsspannungssignal in einem vorspezifizierten Spannungsniveauintervall bereitgestellt ist, dessen Intervallbreite geringer ist als eine Differenz zwischen dem Spannungsniveau des Eingangsspannungssignals in der ersten Verbindungsanordnung und in der zweiten Verbindungsanordnung,
- wobei das Spannungsniveauintervall für das Ausgangsspannungssignal dabei so gewählt ist, dass aufseiten des Mikrocontrollers zwischen einer logischen Null einerseits und einer logischen Eins andererseits unterscheidbar ist.

2. Zweispannungsbatterie (1) nach Anspruch 1, **dadurch gekennzeichnet, dass** für jeden Zellmonitor (Z2, Z3) eines Batteriezellblocks (A2, A3), welcher nicht permanent mit dem Massepunkt (11) der Zweispannungsbatterie (1) verbunden ist, ein Spannungsniveauanpasser vorgesehen ist.

3. Zweispannungsbatterie (1) nach Anspruch 1 oder 2, **dadurch gekennzeichnet, dass** die Datenleitungsanordnung (13) nach Art eines Netzwerks ausgebildet ist und Busdatenleitungen (20) für eine Kommunikation des Mikrocontrollers (12) mit den Zellmonitoren (Z1, Z2, Z3) vorsieht und/oder dass die Datenleitungsanordnung (13) eine zu dem Mikrocontroller (12) geführte erste Leitung (17) und eine zu dem Mikrocontroller (12) geführte zweite Leitung (18) vorsieht, wobei an dem Mikrocontroller (12) eine Spannungsdifferenz zwischen den Leitungen (17, 18) bereitgestellt ist zur Auswertung des Ausgangsspannungssignals.

4. Zweispannungsbatterie (1) nach einem der Ansprüche 1 bis 3, **dadurch gekennzeichnet, dass** der Zellmonitor (Z1) des ersten Batteriezellblocks (A1) über die Datenleitungsanordnung (13) kapazitiv oder galvanisch mit dem Mikrocontroller (12) verbunden ist.

5. Zweispannungsbatterie (1) nach einem der Ansprüche 1 bis 4, **dadurch gekennzeichnet, dass** als Spannungsniveauanpasser ein Übertrager (14, 15, 16) mit einer induktiven Entkopplung vorgesehen ist, wobei der Übertrager eine unmittelbar oder mittelbar mit dem Mikrocontroller (12) verbundene Mikrocontrollerwicklung und eine mit dem Zellmonitor (Z1, Z2, Z3) zusammenwirkende Zellmonitorwicklung aufweist.

6. Zweispannungsbatterie (1) nach Anspruch 5, **dadurch gekennzeichnet, dass** als Übertrager ein Transformator (14, 15, 16) vorgesehen ist.

7. Zweispannungsbatterie (1) nach Anspruch 5 oder 6, **dadurch gekennzeichnet, dass** wenigstens für eine Mehrzahl von Zellmonitoren (Z1, Z2, Z3) ein gemeinsamer Übertrager vorgesehen ist, wobei der gemeinsame Übertrager eine Mehrzahl von Zellmonitorwicklungen aufweist, wobei jeder Zellmonitor (Z1, Z2, Z3) mit wenigstens einer Zellmonitorwicklung zusammenwirkt und wobei eine gemeinsame Mikrocontrollerwicklung für wenigstens zwei Zellmonitorwicklungen vorgesehen ist.

8. Zweispannungsbatterie (1) nach einem der Ansprüche 1 bis 4, **dadurch gekennzeichnet, dass** als Spannungsniveauanpasser eine Pegelwandlerschaltung (19) mit galvanischer Kopplung vorgesehen ist, welche zwischen zwei in der zweiten Verbindungsanordnung benachbarten Batteriezellblöcken (A1, A2, A3) angeordnet ist.

9. Zweispannungsbatterie (1) nach Anspruch 8, **dadurch gekennzeichnet, dass** die Pegelwandlerschaltung (19) einen ersten Schaltungspfad für die Signalübertragung von dem Zellmonitor (Z1, Z2, Z3) zu dem Mikrocontroller (12) und einen zweiten Schaltungspfad für die Signalübertragung von dem Mikrocontroller (12) zu dem Zellmonitor (Z1, Z2, Z3) vorsieht.

10. Zweispannungsbatterie (1) nach Anspruch 8 oder 9, **dadurch gekennzeichnet, dass** die Pegelwandlerschaltung (19) als eine integrierte Schaltung und optional als ein Teil der zugeordneten Zellmonitore (Z1, Z2, Z3) realisiert ist oder dass die Pegelwandlerschaltung (19) diskret aufgebaut ist.

11. Zweispannungsbatterie (1) nach einem der Ansprüche 8 bis 10, **dadurch gekennzeichnet, dass** mehr als zwei Batteriezellblöcke (A1, A2, A3) in der zweiten Verbindungsanordnung seriell miteinander verschaltet sind und dass zwischen zwei benachbarten Batteriezellblöcken (A1, A2, A3) jeweils eine Pegelwandlerschaltung (19) vorgesehen ist, wobei alle Pegelwandlerschaltungen (19) baugleich ausgeführt sind.

12. Zweispannungsbatterie (1) nach einem der Ansprüche 8 bis 11, **dadurch gekennzeichnet, dass** der Mikrocontroller (12) über die Datenleitungsanordnung (13) unmittelbar mit dem ersten Batteriezellblock (A1) verbunden ist und dass alle Batteriezellblöcke (A2, A3), welche nicht permanent mit dem Massepunkt (11) der Zweispannungsbatterie (1) verbunden sind, über den ersten Batteriezellblock (A1) mittelbar mit dem Mikrocontroller (12) verbunden sind.

13. Zweispannungsbatterie (1) nach einem der Ansprüche 9 bis 12, **dadurch gekennzeichnet, dass** in dem ersten Spannungspfad der Pegelwandlerschaltung (19) ein erstes Schaltmodul (Z) mit wenigstens einem Schaltelement (21), mit einem dem Schaltelement (21) zugeordneten Schalteingang (22) und mit einem Signalausgang (23) und/oder dass in dem zweiten Spannungspfad der Pegelwandlerschaltung (19) ein zweites Schaltmodul (Y) mit wenigstens einem Schaltelement (26, 27), mit einem dem Schaltelement (26, 27) zugeordneten Schalteingang (28, 29) und mit einem Signalausgang (30) vorgesehen sind, wobei abhängig von einem an dem Schalteingang (22, 28, 29) des Schaltelements (21, 26, 27) anliegenden Eingangsschaltsignal das Schaltelement (21, 26, 27) in einem ersten Schaltzustand oder in einem zweiten Schaltzustand vorgesehen ist und wobei in den verschiedenen Schaltzuständen wenigstens ein Widerstand (33, 34, 35, 36, 37, 38, 39) des ersten Schaltmoduls (Z) und/oder des zweiten Schaltmoduls (Y) derart unterschiedlich verschaltet ist, dass das Spannungsniveau an dem Signalausgang (23, 30) des ersten Schaltmoduls (Z) und/oder des zweiten Schaltmoduls (Y) in dem ersten Schaltzustand des Schaltelements (21, 26, 27) ein anderes ist als das Spannungsniveau des Signalausgangs (23, 30) in dem zweiten Schaltzustand.

14. Zweispannungsbatterie (1) nach einem der Ansprüche 8 bis 13, **dadurch gekennzeichnet, dass** bezogen auf zwei Spannungsanschlüsse (24, 25) des ersten Schaltmoduls (Z) und/oder bezogen auf zwei Spannungsabschlüsse (31, 32) des zweiten Schaltmoduls (Y) an dem ersten Schaltmodul (Z) und/oder an dem zweiten Schaltmodul (Y) in der zweiten Verbindungsanordnung eine größere Spannungsdifferenz anliegt als in der ersten Verbindungsanordnung.

15. Zweispannungsbatterie (1) nach einem der Ansprüche 1 bis 14, **dadurch gekennzeichnet, dass** von dem Spannungsniveauanpasser für ein erstes Eingangsspannungssignal ein erstes Ausgangsspannungssignal in einem ersten Spannungsniveauintervall und für ein abweichendes zweites Eingangsspannungssignal ein zweites Ausgangsspannungssignal in einem abweichenden zweiten Spannungsniveauintervall bereitgestellt ist.

## Claims

1. Two-voltage battery (1) for a vehicle
- comprising an earth point (11),
- comprising a plurality of battery cells,
- wherein groups (2, 3) of series-connected battery cells form battery cell blocks (A1, A2, A3), and
- wherein at least one first battery cell block (A1) is permanently connected to the earth point (11) of the two-voltage battery (1),
- comprising a plurality of cell monitors (Z1, Z2, Z3) for the battery cell blocks (A1, A2, A3),
- wherein the cell monitors (Z1, Z2, Z3) are configured for monitoring a voltage provided by the individual battery cells of the respective battery cell block (A1, A2, A3) and/or a current through the battery cells of the respective battery cell block (A1, A2, A3), and
- comprising a plurality of power switching elements (P1+, P2+, P2-, P3+, P3-, S1, S2, S3) for optionally connecting the battery cell blocks (A1, A2, A3) in parallel and/or in series,
- wherein, in a first connection arrangement, the battery cell blocks (A1, A2, A3) are connected in parallel and a first voltage is provided at a first terminal point (4), and
- wherein, in a second connection arrangement, the battery cell blocks (A1, A2, A3) are connected in a series arrangement and the first voltage is provided at the first terminal point (4) and/or a second voltage is provided at a second terminal point (5),
**characterized**
- **in that** the cell monitors (Z1, Z2, Z3) are connected to a microcontroller (12) of the two-voltage battery (1) via a data line arrangement (13),
- wherein at least one voltage level adapter (14, 15, 16, 19) is provided between at any rate individual cell monitors (Z1, Z2, Z3) and the microcontroller (12), which voltage level adapter provides, for an input voltage signal which is present at an input of the voltage level adapter (14, 15, 16, 19) assigned to the assigned cell monitor (Z1, Z2, Z3) and which has a different voltage level in the first connection arrangement and in the second connection arrangement, in the first connection arrangement and in the second connection arrangement of the battery cell blocks (A1, A2, A3), at an output of the voltage level adapter (14, 15, 16, 19) connected directly or indirectly to the microcontroller (12), an output voltage signal in a prespecified voltage level interval, the interval width of which is smaller than a difference between the voltage level of the input voltage signal in the first connection arrangement and in the second connection arrangement,
- wherein the voltage level interval for the output voltage signal is chosen here such that it is possible to distinguish between a logic zero, on the one hand, and a logic one, on the other hand, on the part of the microcontroller.

2. Two-voltage battery (1) according to claim 1, **characterized in that** a voltage level adapter is provided for each cell monitor (Z2, Z3) of a battery cell block (A2, A3) that is not permanently connected to the earth point (11) of the two-voltage battery (1).

3. Two-voltage battery (1) according to claim 1 or 2, **characterized in that** the data line arrangement (13) is configured in the manner of a network and provides bus data lines (20) for communication of the microcontroller (12) with the cell monitors (Z1, Z2, Z3), and/or **in that** the data line arrangement (13) provides a first line (17) routed to the microcontroller (12) and a second line (18) routed to the microcontroller (12), wherein a voltage difference between the lines (17, 18) is provided at the microcontroller (12) for the evaluation of the output voltage signal.

4. Two-voltage battery (1) according to any of claims 1 to 3, **characterized in that** the cell monitor (Z1) of the first battery cell block (A1) is capacitively or galvanically connected to the microcontroller (12) via the data line arrangement (13).

5. Two-voltage battery (1) according to any of claims 1 to 4, **characterized in that** a transmitter (14, 15, 16) with inductive decoupling is provided as voltage level adapter, wherein the transmitter has a microcontroller winding that is connected directly or indirectly to the microcontroller (12) and a cell monitor winding that interacts with the cell monitor (Z1, Z2, Z3).

6. Two-voltage battery (1) according to claim 5, **characterized in that** a transformer (14, 15, 16) is provided as transmitter.

7. Two-voltage battery (1) according to claim 5 or 6, **characterized in that** a common transmitter is provided at least for a plurality of cell monitors (Z1, Z2, Z3), wherein the common transmitter has a plurality of cell monitor windings, wherein each cell monitor (Z1, Z2, Z3) interacts with at least one cell monitor winding and wherein a common microcontroller winding is provided for at least two cell monitor windings.

8. Two-voltage battery (1) according to any of claims 1 to 4, **characterized in that** a level converter circuit (19) with galvanic coupling is provided as voltage level adapter, said level converter circuit being arranged between two battery cell blocks (A1, A2, A3) that are adjacent in the second connection arrangement.

9. Two-voltage battery (1) according to claim 8, **characterized in that** the level converter circuit (19) provides a first circuit path for signal transmission from the cell monitor (Z1, Z2, Z3) to the microcontroller (12) and a second circuit path for signal transmission from the microcontroller (12) to the cell monitor (Z1, Z2, Z3).

10. Two-voltage battery (1) according to claim 8 or 9, **characterized in that** the level converter circuit (19) is realized as an integrated circuit and optionally as a part of the assigned cell monitors (Z1, Z2, Z3) or **in that** the level converter circuit (19) is constructed in discrete fashion.

11. Two-voltage battery (1) according to any of claims 8 to 10, **characterized in that** more than two battery cell blocks (A1, A2, A3) are connected in series with one another in the second connection arrangement, and **in that** a level converter circuit (19) is provided between every two adjacent battery cell blocks (A1, A2, A3), wherein all the level converter circuits (19) are embodied structurally identically.

12. Two-voltage battery (1) according to any of claims 8 to 11, **characterized in that** the microcontroller (12) is connected directly to the first battery cell block (A1) via the data line arrangement (13), and **in that** all battery cell blocks (A2, A3) that are not permanently connected to the earth point (11) of the two-voltage battery (1) are connected indirectly to the microcontroller (12) via the first battery cell block (A1).

13. Two-voltage battery (1) according to any of claims 9 to 12, **characterized in that** a first switching module (Z) comprising at least one switching element (21), comprising a switching input (22) assigned to the switching element (21) and comprising a signal output (23) is provided in the first voltage path of the level converter circuit (19), and/or **in that** a second switching module (Y) comprising at least one switching element (26, 27), comprising a switching input (28, 29) assigned to the switching element (26, 27) and comprising a signal output (30) is provided in the second voltage path of the level converter circuit (19), wherein the switching element (21, 26, 27) is provided in a first switching state or in a second switching state depending on an input switching signal present at the switching input (22, 28, 29) of the switching element (21, 26, 27), and wherein in the different switching states at least one resistor (33, 34, 35, 36, 37, 38, 39) of the first switching module (Z) and/or of the second switching module (Y) is connected differently in such a way that the voltage level at the signal output (23, 30) of the first switching module (Z) and/or of the second switching module (Y) in the first switching state of the switching element (21, 26, 27) is different from the voltage level of the signal output (23, 30) in the second switching state.

14. Two-voltage battery (1) according to any of claims 8 to 13, **characterized in that** with respect to two voltage terminals (24, 25) of the first switching module (Z) and/or with respect to two voltage terminals (31, 32) of the second switching module (Y), a greater voltage difference is present at the first switching module (Z) and/or at the second switching module (Y) in the second connection arrangement by comparison with in the first connection arrangement.

15. Two-voltage battery (1) according to any of claims 1 to 14, **characterized in that** the voltage level adapter provides a first output voltage signal in a first voltage level interval for a first input voltage signal and provides a second output voltage signal in a deviating second voltage level interval for a deviating second input voltage signal.

## Revendications

1. Batterie bitension (1) destinée à un véhicule et comprenant
- un point de masse (11),
- une pluralité d'éléments de batterie,
- des groupes (2, 3) d'éléments de batterie montés en série formant des blocs d'éléments de batterie (A1, A2, A3) et
- au moins un premier bloc d'éléments de batterie (A1) étant relié en permanence au point de masse (11) de la batterie bitension (1),
- une pluralité de moniteurs d'élément (Z1, Z2, Z3) destinés aux blocs d'éléments de batterie (A1, A2, A3),
- les moniteurs d'élément (Z1, Z2, Z3) étant conçus pour surveiller une tension fournie par les éléments de batterie individuels du bloc d'éléments de batterie respectif (A1, A2, A3) et/ou un courant circulant à travers les éléments de batterie du bloc d'éléments de batterie respectif (A1, A2, A3), et
- une pluralité d'éléments de commutation de puissance (P1+, P2+, P2-, P3+, P3-, S1, S2, S3) destinés à relier éventuellement les blocs d'éléments de batterie (A1, A2, A3) en parallèle et/ou en série,
- dans un premier ensemble de liaison, les blocs d'éléments de batterie (A1, A2, A3) étant reliés en parallèle et une première tension étant fournie à un premier point de raccordement (4) et
- dans un deuxième ensemble de liaison les blocs d'éléments de batterie (A1, A2, A3) étant reliés en série et la première tension étant fournie au premier point de raccordement (4) et/ou une deuxième tension étant fournie à un deuxième point de raccordement (5),
**caractérisée en ce que**
- les moniteurs d'élément (Z1, Z2, Z3) sont reliés à un microcontrôleur (12) de la batterie bitension (1) par le biais d'un ensemble de lignes de données (13),
- au moins un adaptateur de niveau de tension (14, 15, 16, 19) étant prévu entre chaque moniteur d'élément individuel (Z1, Z2, Z3) et le microcontrôleur (12) et permettant de fournir pour un signal de tension d'entrée qui est appliqué à une entrée, associée au moniteur d'élément associé (Z1, Z2, Z3), de l'adaptateur de niveau de tension (14, 15, 16, 19) et qui présente un niveau de tension différent dans le premier ensemble de liaisons et dans le deuxième ensemble de liaisons, un signal de tension de sortie dans le premier ensemble de liaisons et dans le deuxième ensemble de liaisons des blocs d'éléments de batterie (A1, A2, A3) à une sortie de l'adaptateur de niveau de tension (14, 15, 16, 19) reliée directement ou indirectement au microcontrôleur (12), dans un intervalle de niveau de tension prédéfini, dont la largeur d'intervalle est inférieure à une différence entre le niveau de tension du signal de tension d'entrée dans le premier ensemble de liaisons et dans le deuxième ensemble de liaisons,
- l'intervalle de niveau de tension pour le signal de tension de sortie étant sélectionné de telle sorte que le microcontrôleur puisse faire la distinction entre un « zéro logique » d'une part et un « un logique » d'autre part.

2. Batterie bitension (1) selon la revendication 1, **caractérisée en ce qu'**un adaptateur de niveau de tension est prévu pour chaque moniteur d'élément (Z2, Z3) d'un bloc d'éléments de batterie (A2, A3) qui n'est pas relié en permanence au point de masse (11) de la batterie bitension (1).

3. Batterie bitension (1) selon la revendication 1 ou 2, **caractérisée en ce que** l'ensemble de lignes de données (13) est conçu à la manière d'un réseau et prévoit des lignes de données de bus (20) destinées à la communication entre le microcontrôleur (12) et les moniteurs d'élément (Z1, Z2, Z3) et/ou **en ce que** l'ensemble de lignes de données (13) prévoit une première ligne (17) dirigée vers le microcontrôleur (12) et une deuxième ligne (18) dirigée vers le microcontrôleur (12) une différence de tension entre des lignes (17, 18) étant prévue au niveau du microcontrôleur (12) pour évaluer le signal de tension de sortie.

4. Batterie bitension (1) selon l'une des revendications 1 à 3, **caractérisée en ce que** le moniteur d'élément (Z1) du premier bloc d'éléments de batterie (A1) est relié de manière capacitive ou galvanique au microcontrôleur (12) par le biais de l'ensemble de lignes de données (13).

5. Batterie bitension (1) selon l'une des revendications 1 à 4, **caractérisée en ce qu'**un transmetteur (14, 15, 16) à découplage inductif est prévu comme adaptateur de niveau de tension, le transmetteur comportant un enroulement de microcontrôleur relié directement ou indirectement au microcontrôleur (12) et un enroulement de moniteur d'élément coopérant avec le moniteur d'élément (Z1, Z2, Z3).

6. Batterie bitension (1) selon la revendication 5, **caractérisée en ce qu'**un transformateur (14, 15, 16) est prévu comme transmetteur.

7. Batterie bitension (1) selon la revendication 5 ou 6, **caractérisée en ce qu'**un transmetteur commun est prévu au moins pour une pluralité de moniteurs d'élément (Z1, Z2, Z3), le transmetteur commun comportant une pluralité d'enroulements de moniteur d'élément, chaque moniteur d'élément (Z1, Z2, Z3) coopérant avec au moins un enroulement de moniteur d'élément et un enroulement de microcontrôleur commun étant prévu pour au moins deux enroulements de moniteur d'élément.

8. Batterie bitension (1) selon l'une des revendications 1 à 4, **caractérisée en ce qu'**un circuit convertisseur de niveau (19) à couplage galvanique est prévu comme adaptateur de niveau de tension et est disposé entre deux blocs d'éléments de batterie adjacents (A1, A2, A3) dans le deuxième ensemble de liaisons.

9. Batterie bitension (1) selon la revendication 8, **caractérisée en ce que** le circuit convertisseur de niveau (19) prévoit un premier chemin de circuit destiné à la transmission de signal du moniteur d'élément (Z1, Z2, Z3) au microcontrôleur (12) et un deuxième chemin de circuit destiné à la transmission de signal du microcontrôleur (12) au moniteur d'élément (Z1, Z2, Z3).

10. Batterie bitension (1) selon la revendication 8 ou 9, **caractérisée en ce que** le circuit convertisseur de niveau (19) est réalisé sous la forme d'un circuit intégré et éventuellement d'une partie des moniteurs d'élément associés (Z1, Z2, Z3) ou en ce que le circuit convertisseur de niveau (19) a une structure discrète.

11. Batterie bitension (1) selon l'une des revendications 8 à 10, **caractérisée en ce que** plus de deux blocs d'éléments de batterie (A1, A2, A3) sont montés en série dans le deuxième ensemble de liaison et **en ce qu'**un circuit convertisseur de niveau (19) est prévu à chaque fois entre deux blocs d'éléments de batterie adjacents (A1, A2, A3), tous les circuits convertisseurs de niveau (19) étant de construction identique.

12. Batterie bitension (1) selon l'une des revendications 8 à 11, **caractérisée en ce que** le microcontrôleur (12) est relié directement au premier bloc d'éléments de batterie (A1) par le biais de l'ensemble de lignes de données (13) et **en ce que** tous les blocs d'éléments de batterie (A2, A3), qui ne sont pas reliés en permanence au point de masse (11) de la batterie bitension (1), sont reliés indirectement au microcontrôleur (12) par le biais du premier bloc d'éléments de batterie (A1).

13. Batterie bitension (1) selon l'une des revendications 9 à 12, **caractérisée en ce qu'**un premier module de commutation (Z) comprenant au moins un élément de commutation (21), une entrée de commutation (22) associée à l'élément de commutation (21) et une sortie de signal (23) est prévu dans le premier chemin de tension du circuit convertisseur de niveau (19) et/ou **en ce qu'**un deuxième module de commutation (Y) comprenant au moins un élément de commutation (26, 27), une entrée de commutation (28, 29) associée à l'élément de commutation (26, 27) et une sortie de signal (30) est prévu dans le deuxième chemin de tension du circuit convertisseur de niveau (19), l'élément de commutation (21, 26, 27) étant prévu dans un premier état de commutation ou dans un deuxième état de commutation en fonction d'un signal de commutation d'entrée appliqué à l'entrée de commutation (22, 28, 29) de l'élément de commutation (21, 26, 27) et au moins une résistance (33, 34, 35, 36, 37, 38, 39) du premier module de commutation (Z) et/ou du deuxième module de commutation (Y) étant montée de manière différente dans les différents états de commutation, de sorte que le niveau de tension à la sortie de signal (23, 30) du premier module de commutation (Z) et/ou du deuxième module de commutation (Y) dans le premier état de commutation de l'élément de commutation (21, 26, 27) soit différent du niveau de tension de la sortie de signal (23, 30) dans le deuxième état de commutation.

14. Batterie bitension (1) selon l'une des revendications 8 à 13, **caractérisée en ce que**, par rapport à deux bornes de tension (24, 25) du premier module de commutation (Z) et/ou par rapport à deux bornes de tension (31, 32) du deuxième module de commutation (Y), une différence de tension plus importante est appliquée au premier module de commutation (Z) et/ou au deuxième module de commutation (Y) dans le deuxième ensemble de liaisons que dans le premier ensemble de liaisons.

15. Batterie bitension (1) selon l'une des revendications 1 à 14, **caractérisée en ce que** l'adaptateur de niveau de tension fournit un premier signal de tension de sortie dans un premier intervalle de niveau de tension pour un premier signal de tension d'entrée et un deuxième signal de tension de sortie dans un deuxième intervalle de niveau de tension différent pour un deuxième signal de tension d'entrée différent.
